**Europäisches Patentamt**

**European Patent Office**

**Office européen des brevets**

(19)

(11) Numéro de publication : **0 466 831 B1**

# (12) FASCICULE DE BREVET EUROPEEN

(45) Date de publication du fascicule du brevet :
**21.06.95 Bulletin 95/25**

(51) Int. Cl.⁶ : **G01N 27/14,** G01N 27/16, G01N 33/00, G01N 25/54

(21) Numéro de dépôt : **90907117.7**

(22) Date de dépôt : **05.04.90**

(86) Numéro de dépôt international :
**PCT/FR90/00242**

(87) Numéro de publication internationale :
**WO 90/12313 18.10.90 Gazette 90/24**

(54) **PROCEDE PSEUDO-CONTINU D'INTERROGATION D'UN DETECTEUR DE GAZ OXYDABLE.**

(30) Priorité : **06.04.89 FR 8904547**

(43) Date de publication de la demande :
**22.01.92 Bulletin 92/04**

(45) Mention de la délivrance du brevet :
**21.06.95 Bulletin 95/25**

(84) Etats contractants désignés :
**AT BE CH DE DK ES FR GB IT LI LU NL SE**

(56) Documents cités :
**EP-A- 0 080 406**
**FR-A- 2 537 722**
**Patent Abstracts of Japan, vol. 9, No. 163
(P-371)(1886), 9 July 1985, & JP, A, 6039542**

(73) Titulaire : **L'INSTITUT NATIONAL DE
L'ENVIRONNEMENT INDUSTRIEL ET DES
RISQUES
Parc Technologique ALATA
F-60550 VERNEUIL-EN-HALATTE (FR)**

(72) Inventeur : **ACCORSI, Antoinette 1047, rue
St-Gervais
Pontpoint
F-60700 Pont-Sainte-Maxence (FR)**
Inventeur : **WATTIER, Andrée
3, Cavée Martine
Roberval
F-60410 Verberie (FR)**
Inventeur : **KAZMIERCZAK, Marc
4, Grande-Rue
F-60660 Maysel (FR)**

(74) Mandataire : **Rinuy, Santarelli
14, avenue de la Grande Armée
F-75017 Paris (FR)**

EP 0 466 831 B1

## Description

La présente invention concerne la détection de gaz oxydable dans un milieu gazeux tel que l'air.

De manière connue en soi, la détection d'un gaz oxydable dans l'air est assurée par un appareil capteur, usuellement appelé explosimètre à filament catalytique, dans lequel un filament, généralement de platine, est chauffé par effet Joule, c'est-à-dire par passage d'un courant électrique. Le gaz oxydable contenu dans l'air environnant s'oxyde par catalyse au contact du filament, d'où un échauffement supplémentaire de ce dernier. L'élévation de température qui en résulte provoque une élévation de la résistance du filament, dont la mesure directe ou indirecte permet d'avoir accès à la concentration dudit gaz oxydable dans l'air.

A titre d'exemple, la Demanderesse a proposé dans son brevet FR-1.444.771, déposé le 4 mai 1965, un appareil de prélèvement et de dosage de gaz dans l'air, dans lequel le dosage de gaz est effectué par mesure de la tension aux bornes de l'une des diagonales d'un pont résistif constitué par un filament détecteur et un filament compensateur montés en parallèle avec deux résistances dont l'une est avantageusement réglable.

La Demanderesse a également proposé, dans son brevet FR-1.577.448, déposé le 22 mai 1968, un procédé et un appareil de mesure d'une grandeur caractéristique d'un milieu gazeux, selon lesquels la valeur de la grandeur considérée est estimée à partir de la mesure d'une des données d'alimentation d'un filament détecteur lorsque la résistance de ce dernier est maintenue égale à celle d'un filament compensateur.

La Demanderesse a également proposé, par le brevet FR-1.576.576, déposé le 6 juin 1968, un procédé et un appareil de dosage de gaz combustible selon lesquels on maintient une tension sensiblement constante aux bornes du filament malgré les variations de résistance de ce dernier, pour cause d'usure ou en raison de la présence de gaz combustible.

De même, la Demanderesse a divulgué, dans le brevet FR-1.579.535, déposé le 21 mars 1968, un circuit stabilisateur de tension permettant d'alimenter des filaments doseurs sous une tension sensiblement constante.

Plus récemment, la Demanderesse a proposé dans son brevet FR-2.537.722, déposé le 14 décembre 1982, un procédé et un appareil de mesure visant à éliminer l'influence de la diffusion des gaz oxydables dans l'air et permettant de s'affranchir des différences de chaleur d'oxydation existant entre les gaz. A cet effet, on relève l'évolution au cours du temps d'une grandeur significative de l'alimentation du filament, cette alimentation étant régulée en sorte de maintenir constante la résistance de ce filament.

Cependant, si l'utilisation d'un filament comme catalyseur de la combustion du méthane permet aujourd'hui une surveillance très précise du grisou dans la mine, cela s'accompagne, compte tenu des modalités d'alimentation et de mesure choisies jusqu'à maintenant, de l'inconvénient d'un vieillissement assez rapide et d'une consommation électrique assez grande, ce qui oblige à une utilisation discontinue qui augmente son temps de réponse réel.

Pour tenter de pallier ces inconvénients, d'autres équipements ont été constitués à partir de perles catalytiques constituées d'un détecteur métallique (par exemple en platine), enrobé d'alumine dopée, ayant l'apparence d'une petite perle.

L'utilisation de ces perles catalytiques a permis une surveillance en continu des teneurs en gaz combustible, par suite d'un vieillissement moins rapide lié à une température de combustion plus faible. Cependant, ces perles souffrent d'une dérive importante de la sensibilité, d'une stabilité moins grande et d'un temps de réponse plus long que les filaments.

L'invention a pour objet de pallier les inconvénients précités et de permettre, grâce à un nouveau procédé d'interrogation du filament, à la fois une consommation électrique plus faible et un vieillissement ralenti, et une utilisation pseudocontinue, c'est-à-dire continue aux yeux d'un utilisateur, la période du cycle d'interrogation devenant beaucoup plus courte que le temps de réponse du capteur.

L'invention propose à cet effet un procédé de mesure de la teneur d'un milieu gazeux en un gaz oxydable de nature connue, selon lequel on chauffe électriquement un élément résistif placé dans ce milieu gazeux et ayant une surface catalytique , on détecte la valeur d'une grandeur représentative de la concentration de gaz et on en déduit, à partir d'une loi de conversion obtenue préalablement par échantillonnage, une mesure de ladite teneur de ce milieu gazeux en ce gaz oxydable, caractérisé en ce que, avec une période d'interrogation prédéterminée, on alimente cet élément résistif selon des cycles comportant trois phases :

- dans une première phase on fait circuler dans cet élément résistif un courant de chauffage propre à l'amener, dans un temps de chauffage prédéterminé, à une température de consigne prédéterminée telle que la surface catalytique de cet élément résistif catalyse la combustion dudit gaz oxydable,
- dans une seconde phase, on continue pendant un temps prédéterminé de régulation à alimenter l'élément résistif en courant électrique, avec une intensité que l'on régule en sorte de maintenir la température de cet élément résistif à cette température de consigne, et après stabilisation de la tension $U_D$ aux bornes de cet élément résistif, on relève la valeur de la grandeur représentative de la concentration de gaz et on en déduit ladite mesure de la teneur en gaz oxydable, la puissance du courant électrique circulant pendant cette deuxième phase étant en moyenne sensiblement inférieure à la puissance du courant de chauffage, et

- dans une troisième phase, on diminue la puissance de chauffage de l'élément résistif en sorte de le laisser refroidir jusqu'à une température de repos.

De manière avantageuse on peut interrompre toute alimentation électrique pendant cette troisième phase.

La grandeur représentative de la teneur en gaz est de préférence la résistance du détecteur.

En démarrant ainsi avec une puissance électrique élevée, on arrive à réduire les pertes thermiques, en particulier les pertes par conduction le long des supports de l'élément résistif ou le long de celui-ci.

Ce procédé de l'invention est fondé sur la découverte faite par la Demanderesse que, d'une part, le filament résistif supporte le courant élevé sans se détériorer et que d'autre part la réaction catalytique avec le gaz se produit même après un temps très court (environ 0,15 s).

Par ce procédé, la température nécessaire à l'oxydation du gaz est atteinte très rapidement, limitant les pertes thermiques dans l'environnement, ce qui diminue notablement la consommation électrique.

De plus, par ce procédé, l'oxydation du gaz ne modifie en rien l'équilibre thermique du capteur avec son environnement, si bien que le temps de réponse est raccourci. Ainsi, le capteur fonctionne pour chaque interrogation moins longtemps à haute température et sa durée de vie est augmentée ; il est donc possible d'augmenter la cadence d'interrogation et de faire des mesures plus rapprochées, par exemple toutes les 3 secondes, voire moins.

Selon des dispositions préférées de l'invention :

- la période d'interrogation est au plus égale à 4 secondes ;
- la durée cumulée des première et seconde phases est inférieure à 300 ms.
- la durée de la première phase est inférieure à 200 ms.
- la température de consigne est choisie au moins égale à la température à laquelle débute la réaction du gaz sur l'élément résistif lui-même ou sur l'élément supporté par l'élément résistif ;
- pour un élément résistif lui-même catalyseur a base de platine, la température de consigne est comprise entre 570°C et 1100°C pour le méthane, de préférence entre 900°C et 1100°C ;
- la température de consigne est sensiblement égale à 1000°C.
- la puissance électrique de chauffage est comprise, en moyenne, entre 1 fois et un multiple de la puissance électrique de la seconde phase, ce multiple entier étant compatible avec la tenue de l'élément résistif (en pratique inférieur à 10) ; ce rapport est de préférence compris entre 1 et 3 ;
- de manière avantageuse, pendant la phase de chauffage l'intensité du courant d'alimentation est constante.

Cette deuxième phase qui consiste à maintenir constante la température de l'élément résistif peut être réalisée par différents procédés :

- maintien de la résistance constante, ce qui sera développé par la suite,
- maintien à une valeur donnée constante du rapport de la résistance associée à la température lors de la deuxième phase à la résistance associée à la température de repos (troisième phase) ; cette valeur est par exemple comprise entre 1,1 et 4,
- ou par tout moyen de contrôle de cette température permettant de réguler le courant de chauffage.

Selon une disposition préférée de l'invention on identifie la nature du gaz à partir de la mesure du temps de mise en équilibre thermique du capteur et de corrélations préétablies, pour divers degrés d'humidité de l'air et pour divers gaz possibles, entre la durée de mise en équilibre thermique du capteur et la teneur du gaz considéré.

Des objets, caractéristiques et avantages de l'invention ressortent de la description qui suit, donnée à titre d'exemple en regard des dessins annexés sur lesquels:

- la figure 1 représente le schéma général d'un dispositif adapté à la mise en oeuvre du procédé de mesure de l'invention ;
- la figure 2 représente le schéma du dispositif régulateur du détecteur que comporte ce dispositif;
- la figure 3 est une variante de la figure 2 ;
- la figure 4 est la représentation graphique de l'intensité $I_D$ du courant d'alimentation du détecteur et de la tension $U_D$ aux bornes du détecteur, en fonction du temps, au cours d'un cycle d'interrogation ;
- la figure 5 est la représentation graphique au cours du temps de la résistance du filament durant les phases d'interrogation et de refroidissement de ce filament ;
- les figures 6 et 7 sont constituées par les représentations graphiques de la tension du signal (tension dans l'air-tension en présence de gaz) en fonction de la teneur en gaz oxydable (pour deux filaments distincts) ;
- la figure 8 est une représentation graphique, pour un filament de 80 $\mu$m de diamètre, des corrélations entre la réponse en millivolts du capteur et la teneur réelle dans l'air de cinq gaz, dans le cas d'un air sec (carrés) et dans le cas d'un air humide à 85-90 % (croix) ;

- la figure 9 est une représentation graphique, pour le même type de filament et pour les mêmes gaz, des corrélations entre la réponse en millivolts du capteur et la teneur du gaz exprimée en pourcentage de sa limite inférieure d'explosivité (LIE), dans le cas d'air sec ;
- la figure 10 est une représentation graphique, pour le même type de filament et pour les mêmes gaz, des corrélations entre le temps de mise en équilibre du capteur et la teneur réelle de ces gaz dans l'air, dans le cas d'air sec ;
- la figure 11 est une vue analogue à la figure 10, dans le cas d'airs humides ;
- la figure 12 est une représentation graphique, pour le même type de filament et pour les mêmes gaz, des corrélations entre les temps de mise en équilibre du capteur et la teneur de ces gaz exprimée en % LIE, dans le cas d'airs secs (carrés) et dans le cas d'airs humides (croix) ; et
- la figure 13 est une représentation graphique, pour le même type de filament et pour les mêmes gaz, des corrélations entre la durée de mise en équilibre et la réponse en millivolts du capteur, dans le cas d'airs secs (carrés) et d'airs humides (croix).

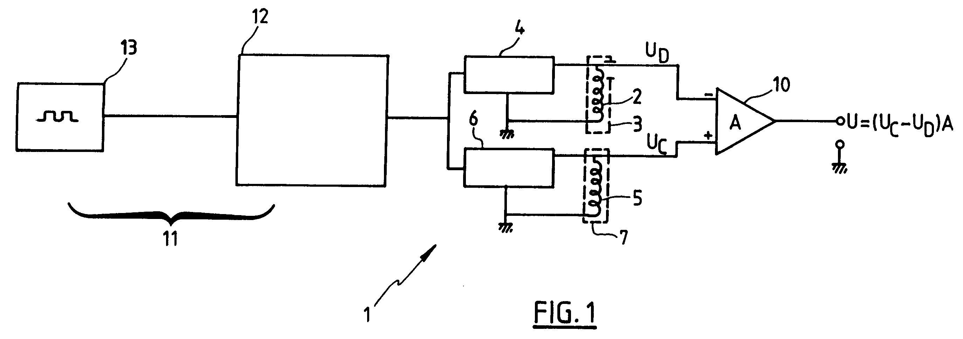

La figure 1 représente un dispositif 1 de détection de gaz oxydables comportant un élément résistif 2 à surface catalytique, formant détecteur, par exemple à base de platine, destiné à être placé dans un milieu gazeux à tester, par exemple contenu dans une cellule de mesure 3 ouverte vers l'extérieur.

Cet élément résistif est par exemple un filament en platine, en pratique un filament enroulé en spires, ayant une section de 80 μm de diamètre et une longueur de 1 cm. En variante non représentée, cet élément resistif est inclus dans une perle catalytique. On pourrait même imaginer que la surface catalytique de cet élément résistif soit en un matériau différent de celui du reste de l'élément résistif.

Entre les bornes de cet élément résistif 2 est disposé un dispositif régulateur 4 de tout type connu approprié adapté à réguler l'alimentation de cet élément 2 en sorte d'en maintenir constante la résistance.

De manière préférée, à cet élément résistif 2 formant détecteur est associé un second élément résistif 5 par exemple ici aussi à base de platine, identique à l'élément 2, entre les bornes duquel est également monté un dispositif régulateur 6 de même nature et de même fonction que le dispositif régulateur 4. Ce second élément résistif 5 est disposé dans un milieu gazeux analogue au milieu gazeux à tester mais exempt de tout gaz oxydable, enfermé dans une seconde cellule de mesure 7 située à proximité de la cellule 3. Ce second élément résistif constitue un compensateur qui permet d'éliminer l'influence de la température extérieure et de l'usure des filaments (qui sont changés en même temps).

Un amplificateur opérationnel 10 de tout type connu approprié est prévu pour faire la différence U, à un coefficient multiplicatif A près, des différences de tension $U_D$ et $U_C$ existant respectivement entre les bornes de l'élément résistif détecteur 2 et de l'élément résistif compensateur 5. Cette différence U peut être, au choix, envoyée notamment vers un afficheur tel qu'un oscilloscope, un transmetteur, une mémoire temporaire, voire vers un dispositif comparateur adapté à déclencher une alarme lorsque cette différence U dépasse un seuil prédéterminé (ici non représentés).

Les dispositifs régulateurs 4 et 6 sont alimentés par un bloc d'alimentation 11 comportant un générateur classique de tensions 12 (5 volts pour l'alimentation de l'élément résistif et de l'élément compensateur et + 15 volts, - 15 volts pour l'alimentation de l'amplificateur) précédé par un séquenceur 13 du type "Pulse Generator Wavetek model 801" qui permet de programmer le temps de chaque interrogation et le temps de repos entre deux interrogations à la cadence voulue.

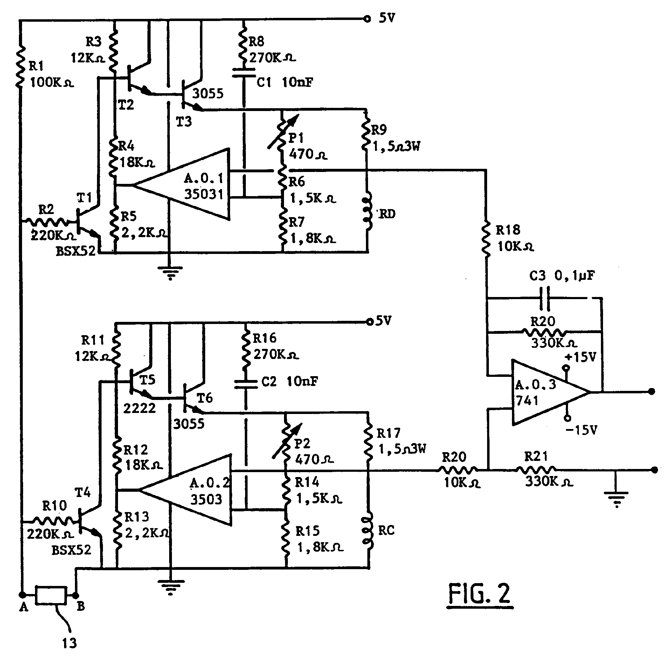

La figure 2 donne, à titre d'exemple non limitatif, le schéma des régulateurs 4 et 6. Chacun de ces régulateurs comporte un pont de résistance alimenté par l'intermédiaire de transistors par le séquenceur 13 branché entre les points A et B délivrant en A une tension au moins égale à 1 volt.

A côté de chacun des composants sont mentionnées sur cette figure 2 les valeurs à leur donner dans le cas d'un filament classique de platine de 1 cm de long et 80 μm de diamètre.

On notera que ce système accélère le chauffage des filaments, puisqu'il les maintient en surtension tant que la température voulue n'est pas atteinte.

L'amplificateur opérationnel $AO_3$ est utilisé dans un montage différentiel classique, la capacité $C_3$ éliminant les parasites de fréquence supérieure à 5 Hz.

Les deux régulateurs sont identiques. Examinons le fonctionnement du premier :

Un niveau haut, ou l'absence de signal sur "A", rend passant le transistor $T_1$. Les transistors $T_2$ et $T_3$ sont alors bloqués et aucun courant ne traverse les filaments.

Un niveau bas sur "A" bloque $T_1$. $T_2$ et $T_3$, commandés par $AO_1$ régulent le courant dans le pont résistif ($P_1$ $R_6$ $R_7$ $R_9$. $R_D$). La régulation est telle que $R_D$ prend la valeur $\dfrac{R_9 \times R_7}{P_1 + R_6}$. Le potentiomètre $P_1$ sert à ajuster cette valeur. $R_8$ et $C_1$ éliminent les oscillations dues à l'inertie thermique du filament.

Les mesures sont prises à l'oscilloscope aux bornes du filament (détecteur ou compensateur) et aux bornes des résistances $R_9$ ou $R_{17}$. Elles sont ensuite retranscrites sur un enregistreur.

La valeur de la tension aux bornes des résistances permet de déterminer les courants passant dans le détecteur et le compensateur ; connaissant la tension aux bornes de ceux-ci on peut déduire la résistance des filaments donc leurs températures.

La sortie de l'amplificateur opérationnel $AO_3$ réglée à O dans l'air permet de mesurer la différence entre les deux régulateurs lors du passage du gaz (ici du méthane). Un dispositif d'interrogation du filament à portée de l'homme de métier permet de programmer le temps d'interrogation et le temps de repos entre deux interrogations à la cadence voulue.

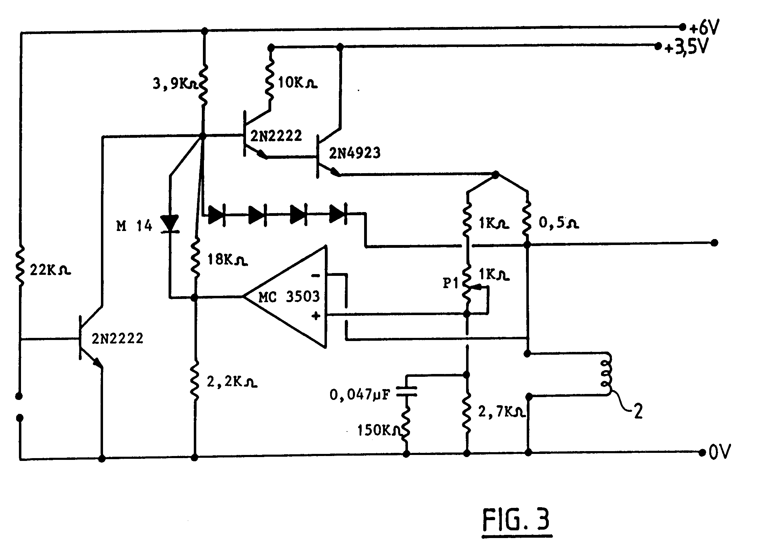

La figure 3 est une variante de réalisation du circuit régulateur 4 ou 6. Il diffère de celui de la figure 2 en ce que le courant reste constant pendant toute la phase de montée en température et a une valeur plus élevée que celle découlant du schéma électrique représentée à la figure 2. Pour ce faire, on a dissocié les sources d'alimentation, l'une (3,5 volts) alimente en puissance l'élément résistif et l'autre (6 volts) alimente l'ensemble du circuit.

De plus, le compensateur 5 et son dispositif régulateur sont supprimés et on surveille ici simplement la tension aux bornes de l'élément résistif 2.

Selon l'invention, le dispositif de la figure 1 est utilisé pour chauffer le détecteur 2, et le compensateur 5 lorsqu'il existe, en deux phases :

- dans une première phase, on fait circuler un courant de chauffage important jusqu'à amener l'élément résistif 2 (et l'élément 5 lorsqu'il existe) jusqu'à une température de consigne prédéterminée ;
- dans une seconde phase, on régule le courant, de manière à maintenir cet élément résistif à cette température de consigne (par exemple maintenir la résistance de cet élément résistif à la valeur associée à cette température de consigne, par exemple $1,2\,\Omega$ pour 1000°C dans le cas d'un filament de 1 cm de long et de 80 µm de diamètre).

L'intensité du courant de chauffage est choisie sensiblement supérieure à l'intensité moyenne du courant de la seconde phase (en pratique, de préférence entre 2 et 3 fois cette intensité moyenne). Cela entraîne un gain de temps et diminue la consommation électrique nécessaire du fait de la diminution des pertes thermiques par conduction associées et raccourcit le temps de refroidissement ultérieur avant l'interrogation suivante. De manière avantageuse ce courant de chauffage a une intensité approximativement constante, mais il peut également s'agir d'une impulsion d'énergie plus forte de forme plus ou moins contrôlée.

Si un gaz oxydable s'oxyde au contact de l'élément résistif détecteur 2, il lui fournira de l'énergie calorifique, et aura donc tendance à élever sa température ; pour compenser, le dispositif régulateur 4 lui fournira moins d'énergie électrique, en diminuant le courant qui le traverse : il en résulte une baisse de tension à ses bornes après stabilisation lors de la deuxième phase qui est représentative de la concentration de gaz.

Dans le cas d'un filament de platine de 1 cm de long et une section de 80 µm de diamètre, la température de consigne est avantageusement choisie environ égale à 1000°C. Théoriquement une température de 570°C serait suffisante pour obtenir la catalyse de la réaction avec le méthane (exemple classique de gaz à surveiller au fond des mines de charbon) mais les circuits électroniques d'amplification de signal sont alors très lourds. Une température à peine plus élevée (600 à 800°C) pallierait en partie cet inconvénient mais le coût de l'électronique associée resterait très important. Une température nettement plus élevée (plus de 1200°C) conduirait à une usure trop rapide du filament. Une température comprise entre 800°C et 1200°C ou, mieux, entre 900°C et 1100°C se révèle correspondre à un compromis optimum des points de vue encombrement, coût, et durée de vie. A titre d'exemple 1000°C et 1200°C correspondent à peu près à des tensions aux bornes de l'élément résistif, de 0,76 V et 0,9 V respectivement.

De manière à pouvoir réduire la durée totale d'alimentation (ensemble des deux phases précitées) et donc la durée ultérieure du refroidissement, et donc augmenter la cadence d'interrogation au point de rendre en apparence continu le processus de mesure, on cherche à obtenir pour la tension d'alimentation lors de la deuxième phase, un amortissement le plus rapide possible après la fin de la phase de chauffage ; pour cela on peut, si nécessaire, ajuster la valeur des composants $C_1$ et $R_8$ à la figure 2 en fonction des caractéristiques spécifiques du filament considéré, de la nature du gaz à surveiller et des plages de teneurs dans lesquelles on veut le surveiller. Les valeurs indiquées aux figures 2 et 3 correspondent à une teneur de 0 à 3% de méthane pour un filament de platine de 1 cm de long et une section de 80 µm de diamètre fabriqué par Oldham sous licence Cerchar.

Pour satisfaire à l'objectif d'un processus de mesure apparemment continu, la période de répétition des cycles d'interrogation est avantageusement choisie au plus égale à 4 secondes environ, de préférence inférieure ou égale à 3 secondes.

Pour des températures de consigne de 900°C à 1200°C la durée totale de chaque cycle d'interrogation est avantageusement inférieure à 400 ms, de préférence égale (ou inférieure) à 300 ms réparties en 200 ms de chauffage et 100 ms de stabilisation avant mesure. L'intensité du courant de chauffage est avantageusement choisie entre 1 et 2 A (par exemple voisine de 1,3 A) tandis que la valeur moyenne de l'intensité en phase de régulation-stabilisation est comprise entre 0,65 A et 0,75 A (par exemple voisine de 0,7 A).

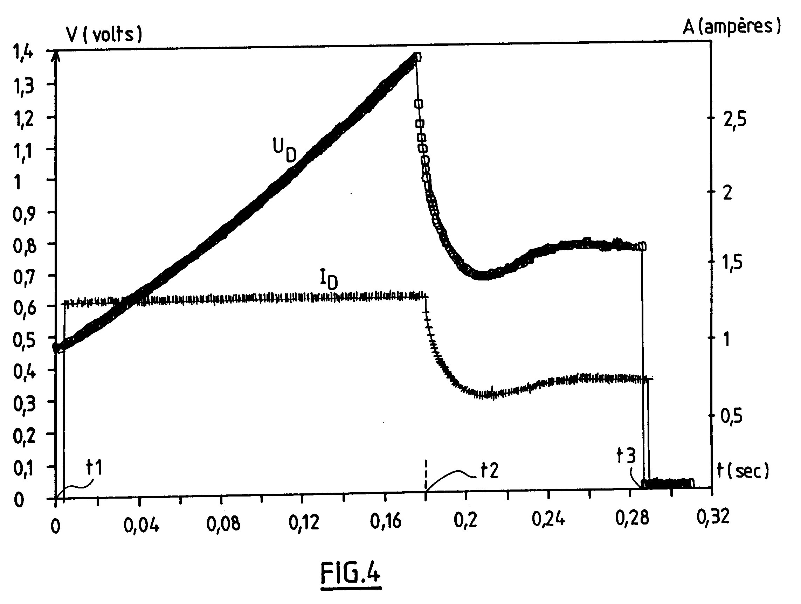

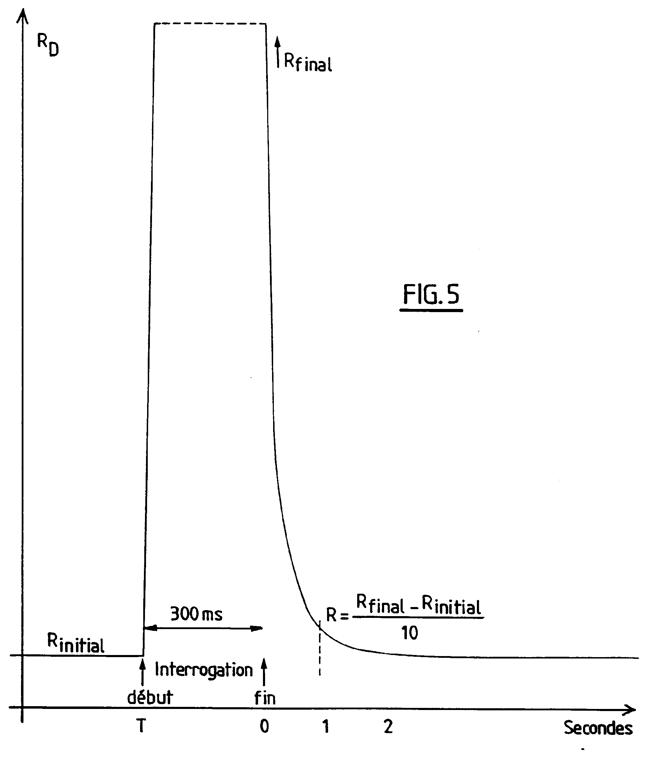

Les figures 4 et 5 représentent respectivement les évolutions au cours du temps de l'intensité $I_D$ et de la tension $U_D$, et celle de la résistance $R_D$, pour le détecteur. Pour une période d'interrogation de 4 secondes, il y a une phase de chauffage de 200 ms environ, et une phase de régulation de 100 ms environ, dans le cas d'un filament de platine (1 cm de long, 80 μm de diamètre) porté à une température de consigne de 1000°C (correspondant à une résistance de 1,3 Ω).

Pendant la première phase le courant a une intensité $I_D$ d'environ 1,3 A tandis que la tension $U_D$ varie de façon quasi-linéaire entre 0,47 V et 1,37 V. Pendant la phase de régulation, le courant fluctue autour de 0,6 A tandis que $U_D$ se stabilise à une valeur caractéristique de la teneur du gaz considéré (inférieure à 0,76 V dans le cas du méthane ici considéré).

On constate qu'après la fin de l'alimentation, la résistance est revenue, au bout de 2 secondes, à une valeur R très proche de sa valeur initiale R $_{initial}$.

Les différents avantages de ce procédé découlent de la réduction de la mise en régime du filament:
- consommation électrique réduite par 2 ou 3,
- temps de réponse diminué,
- cadence d'interrogation augmentée,
- durée de vie du filament améliorée.

Ainsi :
- pour les capteurs de filament de platine interrogés de manière discontinue selon la technique classique, le filament est alimenté sous 0,76 volt avec un courant de 0,8 A pendant 4s, ce dont on déduit l'énergie consommée E = Vit = 2,4 joules et la puissance consommée P = E/t = 600 mwatts.
- pour les capteurs à filament alimenté selon le nouveau procédé, selon le procédé de la présente invention, le filament est traversé par un courant constant de 1,3 ampères pendant 200 ms pour le porter à sa température de fonctionnement, puis le filament fonctionne à température (et résistance) constante avec une tension à ses bornes d'environ 0,76 volt pendant 100 ms.

Pendant la montée en température, la résistance moyenne est de 0,8 ohm (augmentation linéaire de la température, donc de la résistance). Pendant la phase à température constante, la résistance est de 1,3 ohm.

L'énergie consommée est donc :
$$E = R_1 I^2 t_1 + (V^2/R_2)t_2$$
$$E = 0,8 \times 1,3 \times 1,3 \times 0,19 + (0,76 \times 0,76/1,3) \times 0,1$$
$$E = 300 \text{ mjoules}$$
$$P = 75 \text{ mwatts (puisque la cadence est de une mesure toutes les 4 secondes).}$$

Si la phase de montée de température est faite sous 2 ampères, elle ne dure alors que 60 ms. La consommation dans ce cas se trouve réduite à :
$$E = 200 \text{ mjoules et } P = 50 \text{ mwatts.}$$

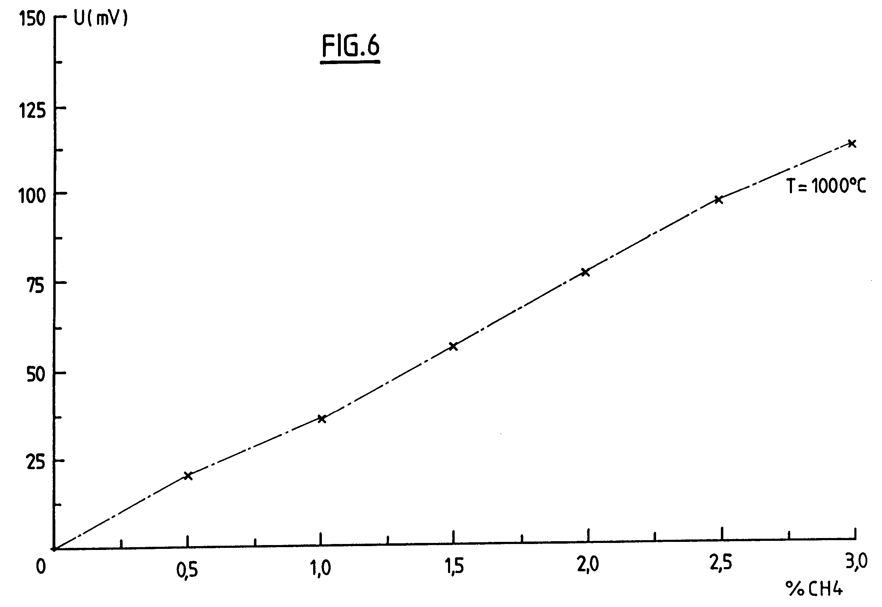

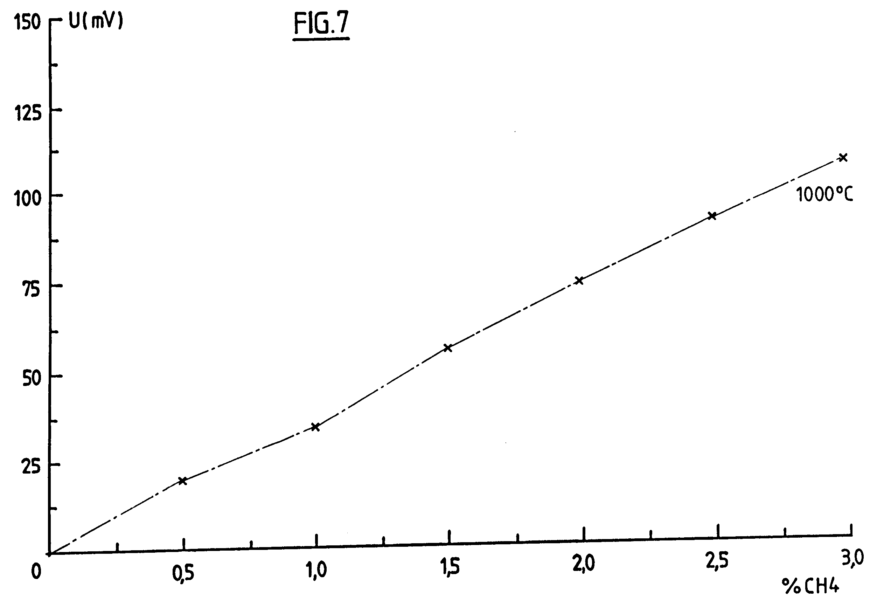

Par ailleurs, les figures 6 et 7 montrent que le signal est linéaire pour les faibles teneurs en gaz explosible (0 à 3%), ce qui permet dans une utilisation comme explosimètre de simplifier le traitement du signal.

Ces mesures sont prises à l'aide d'un enregistreur rapide aux bornes du filament (détecteur ou compensateur) ; la sortie de l'amplificateur opérationnel A, réglée à O dans l'air permet de mesurer la différence entre les tensions à la sortie des deux régulateurs lors du passage du gaz combustible. En fait l'établissement des courbes d'étalonnage se fait de toute manière appropriée.

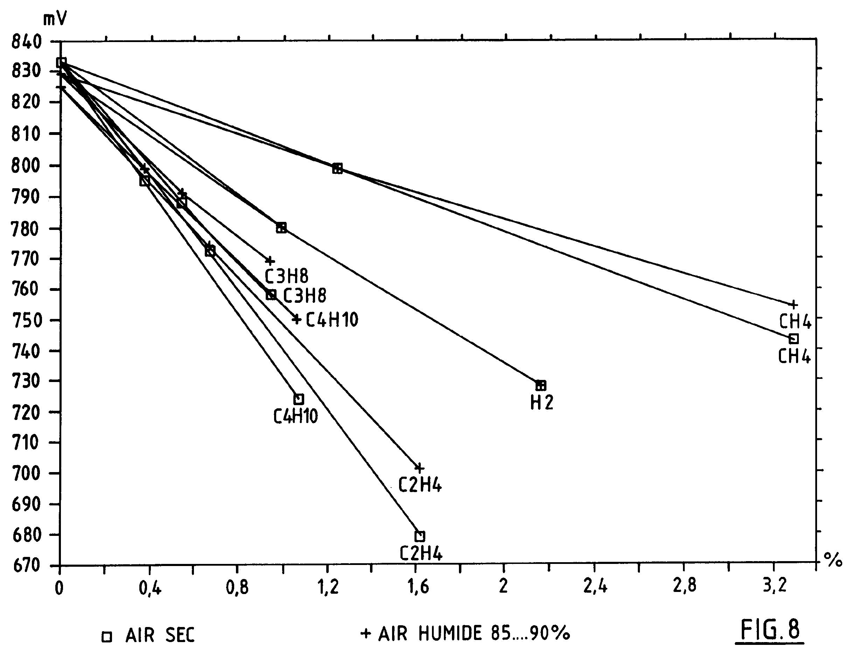

Les figures 8 à 12 présentent une application de l'invention à la reconnaissance préalable, puis à la détection quantitative des gaz oxydables.

En se reportant tout d'abord à nouveau à la figure 4, on constate que, entre le temps $t_1$ et $t_2$, le filament se met en équilibre thermique, cet équilibre étant maintenu entre le temps $t_2$ et $t_3$.

La durée de mise en équilibre thermique $t_2-t_1$ dépend de paramètres liés au filament (nature du filament, géométrie du filament) et de la nature du gaz participant aux échanges thermiques.

La figure 8 montre la réponse en millivolts du capteur en fonction de la teneur réelle de cinq gaz : méthane, propane, butane, éthylène et hydrogène et ce pour deux humidités extrêmes (air sec et air humide à 86 - 90%).

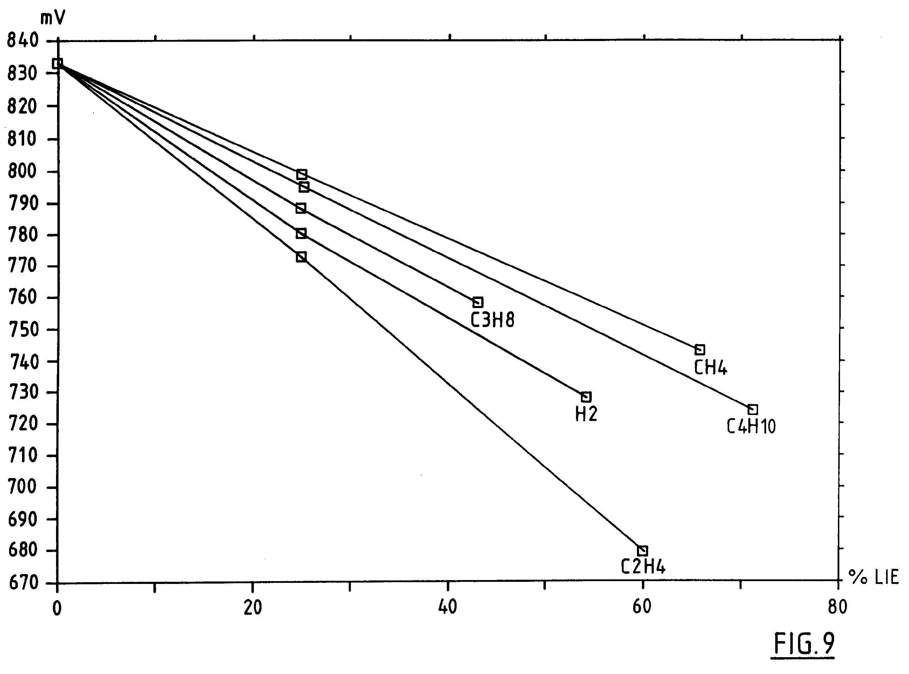

La figure 9 montre la réponse du capteur en fonction de la teneur du gaz exprimée en pourcentage de la limite inférieure d'explosivité (LIE) ; un signal de 760 mV correspond ainsi à des LIE de 54 % ou de 30 % suivant que le gaz explosible est du méthane ou de l'éthylène. Une telle erreur peut être corrigée de deux manières qui ne sont pas satisfaisantes :
- on peut étalonner l'appareil sur un gaz précis que l'on désire détecter mais il faut l'étalonner à nouveau pour mesurer un gaz différent,
- on peut également étalonner l'appareil sur le gaz pour lequel le capteur est le moins sensible (dans notre exemple le méthane) mais on prendra alors des précautions disproportionnées par rapport au danger réel lié à d'autres gaz moins sensibles.

La durée de mise en équilibre thermique du capteur peut être mise à profit pour identifier la nature du gaz ; l'utilisateur est ainsi prévenu du risque réel au point de vue explosivité.

La mesure de la durée de mise en équilibre thermique du capteur est réalisée par une technique classique de traitement du signal par recherche de maximum sur l'ensemble du signal.

On peut également détecter la descente brusque de tension caractéristique de $t_2$ par un comparateur électronique qui active une entrée du microcontrôleur.

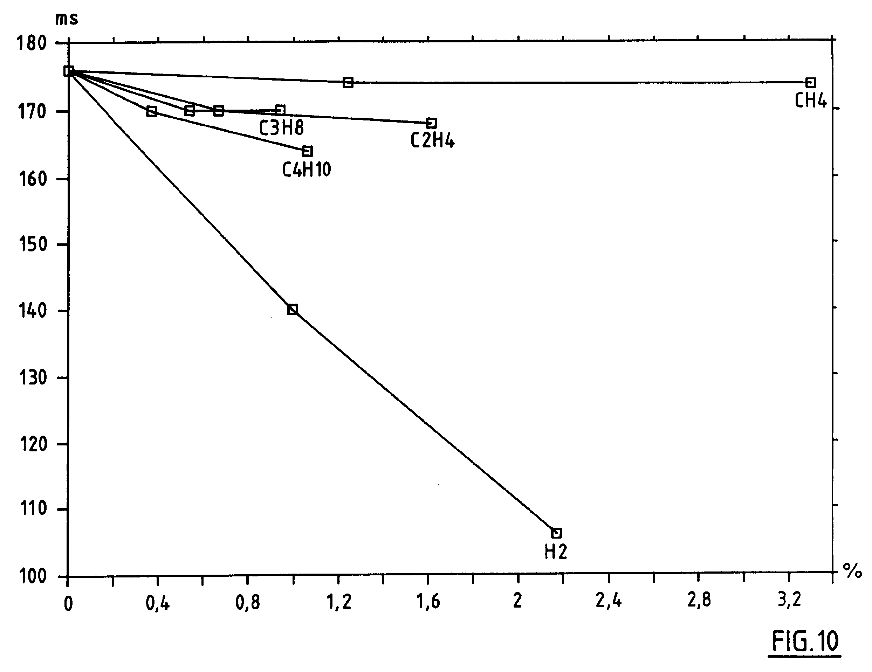

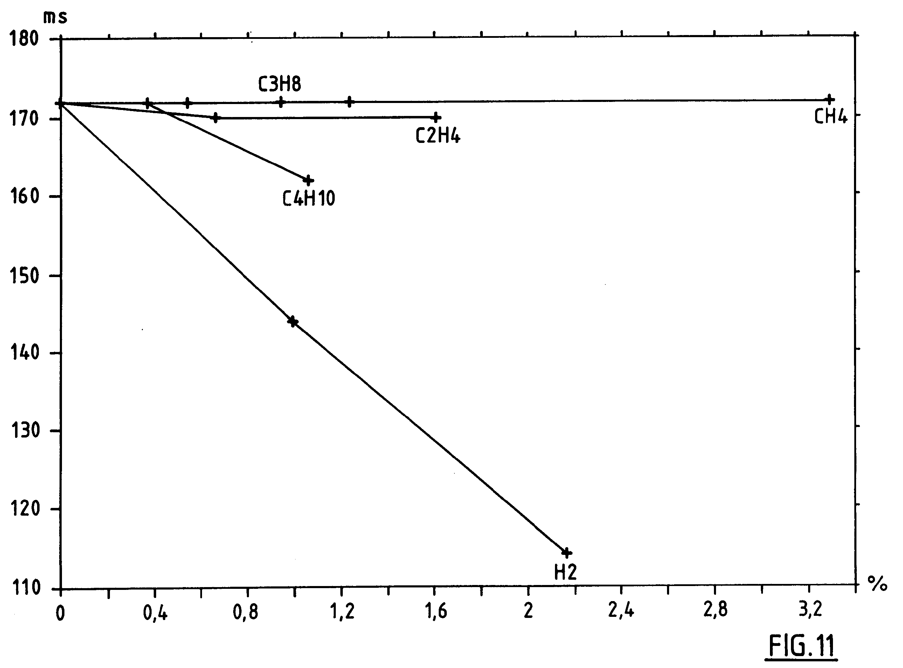

Les figures 10 et 11 indiquent le temps de mise en équilibre en fonction de la teneur réelle de cinq gaz pour de l'air humide et de l'air sec ; on constate qu'il est ainsi possible de caractériser chaque gaz.

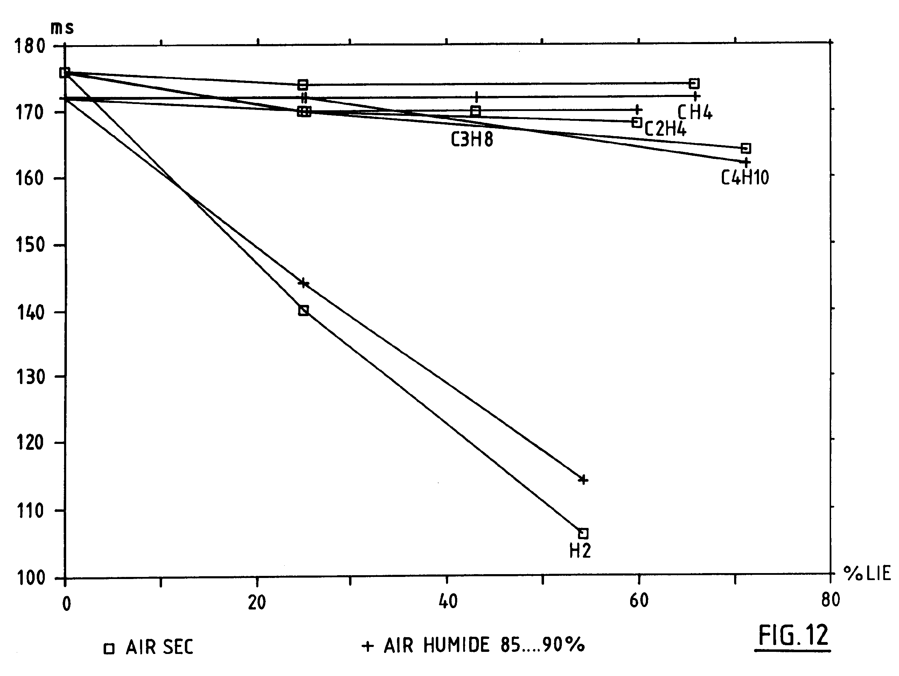

La figure 12 représente la relation entre le temps d'équilibre thermique et la réponse du capteur exprimée en % de la LIE pour différents gaz dans l'air sec et dans l'air humide (on note la faible influence de l'humidité de l'air sur le temps d'équilibre du détecteur).

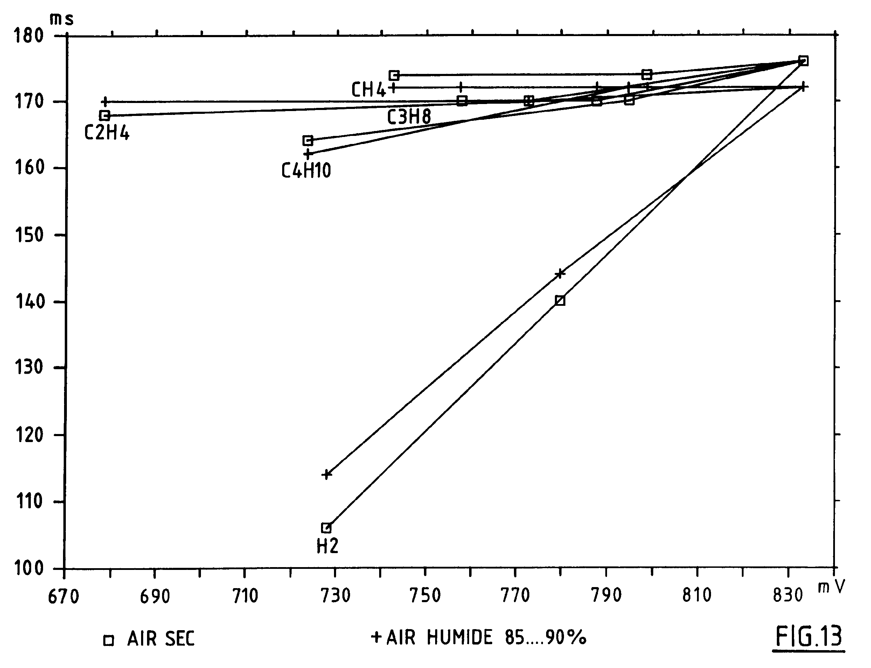

L'identification du gaz est réalisée par la mesure du temps de mise en équilibre et le signal en mV aux bornes du filament (voir la figure 13) ; ce couple de valeurs correspond à un point d'une des courbes si le gaz fait partie de la famille recensée dans le programme du microcontrôleur.

La mise en oeuvre de cette technique passe par le traitement des informations par un microcontrôleur. Ce dernier peut ainsi, à partir du signal de tension aux bornes du filament, donner à l'utilisateur à l'aide d'un afficheur alphanumérique la teneur en gaz et sa nature grâce à la mesure du temps d'équilibre.

Le microcontrôleur contient dans une mémoire morte les données nécessaires à la reconnaissance des gaz déduites de la figure 12.

La programmation du microcontrôleur 4 permet à celui-ci de réaliser les opérations de comparaison, de reconnaissance et d'affichage nécessaires à la mise en oeuvre de l'appareil.

Il va de soi que de nombreuses variantes de réalisation peuvent être proposées par l'homme de l'art sans sortir du cadre de l'invention, tant en ce qui concerne le filament et l'électronique de traitement. De même, les paramètres expérimentaux peuvent être choisis dans une large gamme de valeurs (température ou résistance de filament).

D'une manière générale, le procédé peut également s'appliquer à tout capteur fonctionnant de manière discontinue à une certaine température.

L'invention trouve ainsi un champ d'application très vaste en associant après la mesure, différents traitements du signal assurant l'affichage, la transmission, la mise en mémoire et en cas de dépassement d'un seuil, le déclenchement d'alarme.

L'invention peut se généraliser à des applications telles que notamment la réalisation de capteurs pour chromatographie gazeuse.

**Revendications**

1. Procédé de mesure de la teneur d'un milieu gazeux en un gaz oxydable de nature connue, selon lequel on chauffe électriquement un élément résistif placé dans ce milieu gazeux et ayant une surface catalytique, on détecte la valeur d'une grandeur représentative de la concentration de gaz, et on en déduit, à partir d'une loi de conversion obtenue préalablement par échantillonnage, une mesure de ladite teneur de ce milieu gazeux en ce gaz oxydable, caractérisé en ce que, avec une période d'interrogation prédéterminée, on alimente cet élément résistif selon des cycles comportant trois phases :

   - dans une première phase on fait circuler dans cet élément résistif un courant de chauffage propre à l'amener, dans un temps de chauffage prédéterminé, à une température de consigne prédéterminée telle que la surface catalytique de cet élément résistif catalyse la combustion dudit gaz oxydable,

   - dans une seconde phase, on continue pendant un temps prédéterminé de régulation à alimenter l'élément résistif en courant électrique, avec une intensité que l'on régule en sorte de maintenir la température de cet élément résistif à cette température de consigne, et après stabilisation de la tension ($U_D$) aux bornes de cet élément résistif, on relève la valeur de la grandeur représentative de la concentration de gaz et on en déduit ladite mesure de la teneur en gaz oxydable, la puissance du courant électrique circulant pendant cette deuxième phase étant en moyenne sensiblement inférieure à la puissance du courant de chauffage, et

   - dans une troisième phase, on diminue la puissance de chauffage de l'élément résistif en sorte de le laisser refroidir jusqu'à une température de repos.

2. Procédé selon la revendication 1, caractérisé en ce que, la période d'interrogation est au plus égale à 4 secondes.

3. Procédé selon la revendication 2, caractérisé en ce que, la durée cumulée des première et seconde phases est inférieure à 300 ms.

4. Procédé selon la revendication 3, caractérisé en ce que, la durée de la première phase est inférieure à 200 ms.

5. Procédé selon l'une quelconque des revendications 1 à 4, caractérisé en ce que, l'élément résistif (2) étant à base de platine et lui-même catalyseur, la température de consigne est choisie entre 570°C et 1100°C pour le méthane.

6. Procédé selon la revendication 5, caractérisé en ce que, la température de consigne est sensiblement égale à 1000°C.

7. Procédé selon l'une quelconque des revendications 1 à 6, caractérisé en ce que, la puissance de chauffage est comprise, en moyenne, entre 1 et 3 fois la puissance électrique de la seconde phase.

8. Procédé selon l'une quelconque des revendications 1 à 7, caractérisé en ce que, pendant la phase de chauffage l'intensité du courant d'alimentation est constante.

9. Procédé selon l'une quelconque des revendications 1 à 8, caractérisé en ce que dans la troisième phase on interrompt l'alimentation électrique.

10. Procédé selon l'une quelconque des revendications 1 à 8, caractérisé en ce que la température lors de la deuxième phase est, vis à vis de la température de la troisième phase, dans un rapport compris entre 1,1 et 4.

11. Procédé selon l'une quelconque des revendications 1 à 10, caractérisé en ce que la grandeur représentative de la concentration de gaz est la résistance de l'élément résistif.

12. Procédé selon l'une quelconque des revendications 1 à 11, caractérisé en ce qu'on identifie la nature du gaz à partir de la mesure du temps de mise en équilibre thermique du capteur et de corrélations préétablies, pour divers degrés d'humidité de l'air et pour divers gaz possibles, entre la durée de mise en équilibre thermique du capteur et la teneur du gaz considéré.

**Patentansprüche**

1. Verfahren zur Messung des Gehalts eines gasförmigen Mediums an einem oxidierbaren Gas bekannter Beschaffenheit, bei dem ein Widerstandselement, das in diesem gasförmigen Medium angeordnet ist und eine katalytische Oberfläche besitzt, elektrisch aufgeheizt, der Wert einer für die Gaskonzentration repräsentativen Größe ermittelt und hieraus nach einem Umwandlungsgesetz, das vorher durch Stichprobennahme erstellt wurde, ein Maß für den Gehalt des gasförmigen Mediums in diesem oxidierbaren Gas abgeleitet wird, **dadurch gekennzeichnet**, daß nach einer vorher festgelegten Abfrageperiode dieses Widerstandselement gemäß Zyklen, die drei Phasen umfassen, versorgt wird:
   - in einer ersten Phase wird das Widerstandselement mit einem Heizstrom beaufschlagt, der es innerhalb einer vorher festgelegten Aufheizzeit auf eine vorbestimmte Solltemperatur bringt, so daß die katalytische Oberfläche des Widerstandselements die Verbrennung des oxidierbaren Gases katalysiert;
   - in einer zweiten Phase wird das Widerstandselement während einer vorher festgelegten Regelungszeit fortgesetzt mit elektrischem Strom versorgt, dessen Stärke so geregelt wird, daß die Temperatur des Widerstandselements auf der Solltemperatur gehalten wird, und nach Stabilisierung der Spannung ($U_D$) an den Anschlußklemmen des Widerstandselements wird der Wert der für die Gaskonzentration repräsentativen Größe ermittelt und davon das erwähnte Maß für den Gehalt an oxidierbarem Gas abgeleitet, wobei die Leistung des elektrischen Stromes, der während dieser zweiten Phase fließt, im Durchschnitt etwas geringer als die Leistung des Heizstroms ist, und
   - in einer dritten Phase wird die Heizleistung des Widerstandselements derart reduziert, daß dieses auf eine Ruhetemperatur abkühlt.

2. Verfahren nach Anspruch 1, dadurch gekennzeichnet, daß die Abfrageperiode höchstens 4 Sekunden dauert.

3. Verfahren nach Anspruch 2, dadurch gekennzeichnet, daß die Gesamtdauer von erster und zweiter Phase unter 300 ms liegt.

4. Verfahren nach Anspruch 3, dadurch gekennzeichnet, daß die Dauer der ersten Phase unter 200 ms liegt.

5. Verfahren nach einem der Ansprüche 1 bis 4, dadurch gekennzeichnet, daß für Methan die Solltemperatur zwischen 570°C und 1.100°C gewählt wird, wobei das Widerstandselement (2) aus einem Material auf Platinbasis besteht und selbst katalysierend ist.

6. Verfahren nach Anspruch 5, dadurch gekennzeichnet, daß die Solltemperatur ungefähr bei 1.000°C liegt.

7. Verfahren nach einem der Ansprüche 1 bis 6, dadurch gekennzeichnet, daß die Heizleistung im Durchschnitt im Bereich vom Ein- bis zum Dreifachen der elektrischen Leistung der zweiten Phase liegt.

8. Verfahren nach einem der Ansprüche 1 bis 7, dadurch gekennzeichnet, daß während der Heizphase die Stärke des zugeführten Stroms konstant ist.

9. Verfahren nach einem der Ansprüche 1 bis 8, dadurch gekennzeichnet, daß in der dritten Phase die elektrische Stromversorgung unterbrochen wird.

10. Verfahren nach einem der Ansprüche 1 bis 8, dadurch gekennzeichnet, daß die Temperatur in der zweiten Phase zur Temperatur in der dritten Phase in einem Verhältnis im Bereich von 1,1 bis 4 steht.

11. Verfahren nach einem der Ansprüche 1 bis 10, dadurch gekennzeichnet, daß die für die Gaskonzentration repräsentative Größe der Widerstand des Widerstandselements ist.

12. Verfahren nach einem der Ansprüche 1 bis 11, dadurch gekennzeichnet, daß die Beschaffenheit des Gases aus der Messung der Zeit für die Einstellung des thermischen Gleichgewichts des Meßfühlers und der für verschiedene Feuchtigkeitsstufen der Luft und verschiedene mögliche Gase vorher bestimmten Korrelationen zwischen der Dauer für die Einstellung des thermischen Gleichgewichts des Meßfühlers und dem Gehalt an betrachtetem Gas ermittelt wird.

**Claims**

1. Method for measuring the content, in a gaseous medium, of an oxidizable gas of a known nature, according to which a resistive element which is placed in this gaseous medium and which has a catalytic surface is electrically heated, the value of a quantity representing the concentration of gas is detected, and a measurement of the said oxidizable gas content in this gaseous medium is derived therefrom by means of a conversion law previously obtained through sampling, characterised in that, with a predetermined interrogation period, this resistive element is fed in cycles forming three phases:
   - in a first phase, a heating current is caused to circulate in this resistive element which is suitable for taking it, in a predetermined heating period, to a predetermined set temperature such that the catalytic surface of this resistive element catalyses the combustion of the said oxidizable gas,
   - in a second phase, the resistive element continues to be fed with electrical current for a predetermined regulation period, at an intensity which is regulated so as to maintain the temperature of this resistive element at this set temperature and, following stabilisation of the voltage ($U_D$) at the terminals of this resistive element, the value of the quantity representing the gas concentration is read and from this the said measurement of the oxidizable gas content is derived, the power of the electrical current flowing during this second phase being, on average, substantially lower than the power of the heating current, and
   - in a third phase, the heating power of the resistive element is reduced so as to allow it to cool to a stand-by temperature.

2. Method according to Claim 1, characterised in that the interrogation period is equal to 4 seconds at the most.

3. Method according to Claim 2, characterised in that the combined duration of the first and second phases is less than 300 ms.

4. Method according to Claim 3, characterised in that the duration of the first phase is less than 200 ms.

5. Method according to any one of Claims 1 to 4, characterised in that, as the resistive element (2) is based on platinum and is itself a catalyst, the set temperature is chosen between 570°C and 1100°C for methane.

6. Method according to Claim 5, characterised in that the set temperature is significantly lower than 1000°C.

7. Method according to any one of Claims 1 to 6, characterised in that the heating power is, on average, between 1 and 3 times the electrical power of the second phase.

8. Method according to any one of Claims 1 to 7, characterised in that, during the heating phase, the intensity of the supply current is constant.

9. Method according to any one of Claims 1 to 8, characterised in that the electrical supply is interrupted in the third phase.

10. Method according to any one of Claims 1 to 8, characterised in that the temperature during the second phase is in a ratio of between 1.1 and 4 with respect to the temperature of the third phase.

11. Method according to any one of Claims 1 to 10, characterised in that the quantity representing the concentration of gas is the resistance of the resistive element.

12. Method according to any one of Claims 1 to 11, characterised in that the nature of the gas is identified from the measurement of the time at which the sensor is brought into thermal equilibrium and from pre-established correlations, for various degrees of air humidity and for various possible gases, between the time taken to bring the sensor into thermal equilibrium and the content of the gas in question.

**10**

$$U=(U_C-U_D)A$$

FIG.1

FIG. 2

FIG. 3

FIG.4

FIG.5

$$R = \frac{R_{final} - R_{initial}}{10}$$

FIG.6

EP 0 466 831 B1

FIG.7

EP 0 466 831 B1

FIG.8

FIG.9

EP 0 466 831 B1

FIG.10

EP 0 466 831 B1

EP 0 466 831 B1

FIG.11

FIG.12

FIG.13